# EUROPÄISCHE PATENTSCHRIFT

(11) **EP 1 309 287 B1**
(45) Veröffentlichungstag und Bekanntmachung des Hinweises auf die Patenterteilung: **10.01.2007**
(21) Anmeldenummer: 01957677.6
(22) Anmeldetag: 16.08.2001
(51) Int. Cl.: A61C 5/00, A61C 7/00

(54) **ZAHNSCHIENE**
DENTAL SPLINT
APPAREIL DENTAIRE FIXE D'ORTHODONTIE

(30) Priorität: 16.08.2000 CH 158600
(43) Veröffentlichungstag der Anmeldung: 14.05.2003
(73) Patentinhaber: Medartis AG, 4051 Basel (CH)
(72) Erfinder: VON ARX, Thomas, CH-6020 Emmenbrücke (CH); FILIPPI, Andreas, CH-4053 Basel (CH); PFEFFERLE, Joachim, 79244 Münstertal (DE)
(74) Vertreter: Heinen, Detlef
(86) Internationale Anmeldenummer: PCT/CH2001/000502
(87) Internationale Veröffentlichungsnummer: WO 2002/013716

(56) Entgegenhaltungen:
- US-A- 4 433 960
- US-A- 5 087 202
- US-A- 5 184 955
- US-A- 5 829 979
- US-A- 6 095 809

## Beschreibung

Die Erfindung betrifft eine Zahnschiene zur Fixierung eines Zahnes (oder auch mehrerer Zähne) mit erhöhter Beweglichkeit gemäss dem Oberbegriff des unabhängigen Patentanspruchs. Ferner betrifft die Erfindung einen Streifen eines Materials, welches für Zahnschienen eingesetzt werden kann und welches eine Länge aufweist, die ein Mehrfaches der Länge einer Zahnschiene beträgt.

Zahnschienen kommen beispielsweise bei der Fixierung eines traumatisierten Zahnes oder mehrerer traumatisierter Zähne bzw. bei der Reimplantation eines Zahnes oder mehrerer Zähne zum Einsatz. Der traumatisierte (bzw. reimpläntierte) Zahn bzw. die traumatisierten (bzw. reimplantierten) Zähne weisen dabei in der Regel eine stark erhöhte Beweglichkeit auf. Zur Fixierung des traumatisierten Zahnes in einer gewünschten Position wird die Schiene üblicherweise sowohl an Stützzähnen beiderseits des traumatisierten (bzw. reimplantierten) Zahnes bzw. der traumatisierten (bzw. reimplantierten) Zähne als auch an dem traumatisierten (bzw. reimplantierten) Zahn bzw. den traumatisierten Zähnen selbst befestigt. Die Befestigung der Schiene an den Zähnen erfolgt heute typischerweise mit Hilfe eines Klebstoffs.

Im folgenden sollen vier Typen von Schienen kurz erläutert werden, die in der Praxis allesamt Verwendung finden. Hierbei wird insbesondere auch auf den Artikel "Reimplantation nach Trauma: Einfluss der Schienung auf die Zahnbeweglichkeit" von Filippi verwiesen in "Zahnärztliche Implantologie, Nr. 16 (2000)", erschienen im Carl Hanser Verlag, München.

Bei dem ersten Typ handelt es sich um die sogenannte "Kunststoff-Schiene". Die Kunststoff-Schiene ist im Prinzip nichts Anderes als ein Strang aus einer Kunststoff-Masse, welcher sich sowohl über die traumatisierten Zähne als auch über die diesseits und jenseits benachbarten Stützzähne erstreckt und mittels Säure-Ätz-Technik an den vestibulären Zahnflächen am Zahnschmelz angeklebt ist.

Bei dem zweiten Typ Zahnschiene handelt es sich um die sogenannte "Drahtbogen-Schiene". Dies ist im Prinzip nichts Anderes als ein Stück stabiler, aber plastisch verformbarer mehr oder weniger eindimensionaler (d.h. dünner, gleichwohl jedoch stabiler) Draht bzw. Steg, der auf entsprechend vorbereiteten Klebeflächen mittels der bereits weiter oben angesprochenen Säure-Ätz-Technik an den vestibulären Zahnflächen am Zahnschmelz sowohl der traumatisierten Zähne als auch der diesseits und jenseits benachbarten Stützzähne verklebt wird.

Bei dem dritten Typ Zahnschiene handelt es sich um die sogenannte "Bracket-Schiene". Dies ist eine Zahnschiene, bei welcher sowohl auf den traumatisierten Zähnen als auch auf den diesseits und jenseits benachbarten Stützzähnen flächige Plättchen auf den vestibulären Zahnflächen auf den Zahnschmelz mittels der Säure-Ätz-Technik aufgeklebt werden. Diese Plättchen weisen kleine nach labial - also in Richtung zur Lippe hin - vorstehende Zapfen auf, um welche herum ein Ligaturendraht gewickelt ist, welcher auf diese Weise die einzelnen Plättchen miteinander verbindet. Der Ligaturendraht kann gegebenenfalls zwischen den Zapfen noch verdrillt sein.

Bei dem vierten Typ Zahnschiene handelt es sich schliesslich um die sogenannte "Ring-Klebe-Schiene". Die Ring-Klebe-Schiene weist vom Prinzip her mehrere ringförmige Augen auf, wobei die einzelnen benachbart angeordneten Augen mittels eines mehr oder weniger eindimensionalen (d.h. dünnen, gleichwohl aber stabilen) Stegs verbunden sind. Jedes Auge weist eine Durchtrittsöffnung auf, welche ihrerseits von einem Steg umgeben ist.

Das Aufbringen der Ring-Klebe-Schiene erfolgt ebenfalls mittels der Säure-Ätz-Technik. Zuvor ist der Zahn bzw. die Zähne mit der erhöhten Beweglichkeit bereits in die gewünschte Position reponiert worden, ggf. unter Lokalanästhesie. Das Aufbringen der Schiene kann nun beispielsweise derart erfolgen, dass nach der Reinigung der vestibulären Zahnflächen die glatten vestibulären Zahnflächen in einem bestimmten Bereich durch gezieltes Aufbringen einer Ätzflüssigkeit chemisch aufgerauht werden. Danach wird ein Tropfen dünnflüssiger Klebstoff auf diesen chemisch aufgerauhten Bereich aufgetragen. Die zuvor modellierte Ring-Klebe-Schiene wird dann an den Zahnbogen angelegt und in den weichen Klebstoff eingedrückt. Anschliessend wird weiterer dickflüssigerer Klebstoff durch die Durchtrittsöffnungen der Augen der Ring-Klebe-Schiene hindurch aufgetragen, um die Stege der Augen und damit die gesamte Schiene mit den vestibulären Zahnflächen zu verbinden. Dabei ist darauf zu achten, dass die reponierten Zähne für die Dauer des Aushärtens des Klebstoffes (typischerweise nur wenige Sekunden) in der gewünschten Position gehalten werden.

Alle diese Typen von Zahnschienen haben sich in der Praxis durchaus bewährt, weisen aber noch bestimmte Verbesserungsmöglichkeiten auf. So sind im allgemeinen die Klebeflächen noch verhältnismässig gross, bei einzelnen Schienen ist der Patientenkomfort nicht optimal, die Schiene stört nach dem Aufbringen durch zu intensiven Kontakt mit den Weichteilen, insbesondere den Lippen. Bei anderen Schienen ist das Handling beim Anbringen der Schiene vergleichsweise aufwändig. Bei der Drahtbogen-Schiene wie auch bei der Bracket-Schiene ist die Rotationsstabiliät der Schiene, also die Stabilität der Schiene bei einer Torsionsbelastung, noch verbesserungswürdig.

Zahnschienen sind ebenfalls in US 4 433 960 und US 5 087 202 offenbart wobei die Zahnschiene aus US 5 087 202 alle Merkmale der jeweiligen Oberbegriffs der unabhängigen Patentansprüche aufweist.

Es ist daher eine Aufgabe der Erfindung, eine im Hinblick auf die vorstehend erwähnten Nachteile verbesserte Zahnschiene vorzuschlagen.

Diese Aufgabe wird durch die erfindungsgemässe Zahnschiene gelöst, wie sie durch die Merkmale des unabhängigen Patentanspruchs charakterisiert ist. Weitere vorteilhafte Ausgestaltungen der erfindungsgemässen Zahnschiene ergeben sich aus den abhängigen Patentansprüchen. Weiterhin wird die Aufgabe durch einen Streifen eines entsprechenden für Zahnschienen geeigneten Materials gelöst, welcher im Prinzip als längerer Vorratsstreifen vorrätig gehalten werden kann und dann bei Bedarf vor Ort auf die für die jeweilige Zahnschiene erforderliche Länge zugeschnitten werden kann. Vorteilhafte Ausgestaltungen dieses Streifens, die denen der Schiene entsprechen ergeben sich aus den entsprechenden abhängigen Patentansprüchen.

Die erfindungsgemässe Zahnschiene weist mehrere Augen auf, wobei benachbart angeordnete Augen miteinander verbunden sind. Die einzelnen Augen weisen jeweils eine Durchtrittsöffnung auf, welche von einem Steg umgeben ist, sodass durch die Durchtrittsöffnung z.B. ein Klebstoff auf den hinter der jeweiligen Durchtrittsöffnung angeordneten Zahn aufgebracht werden kann, um die Zahnschiene am Zahn zu befestigen. Die Verbindung benachbarter Augen ist dabei als flächige Verbindung ausgebildet, was eine gute Rotationsstabilität der Schiene bewirkt. Ausserdem kann die erfindungsgemässe Schiene auf einfache Weise intraoral an den Zahnbogenverlauf bzw. an die Kontur der vestibulären Zahnflächen angepasst werden. Die Schiene ist ebenfalls einfach wieder entfernbar, und erfüllt des weiteren alle Anforderungen der modernen Schienungstechnik nach Zahntraumata.

Diese Anforderungen betreffen insbesondere die Erhaltung der physiologischen Zahnbeweglichkeit sowohl der geschienten Zähne als auch der Stützzähne (der geschiente Zahn bzw. die geschienten Zähne wie auch die Stützzähne werden durch das Aufbringen der Schiene nicht vollständig immobilisiert). Die Rehabilitation.erfolgt somit schnell und funktionell. Ferner ist eine ausgezeichnete Hygiene im Bereich der Schiene - sowohl interdental als auch im Sulcus-Bereich) gewährleistet. Schliesslich kann die Schiene auf einfache Weise individuell angepasst werden.

Bei der erfindungsgemässen Zahnschiene ist die Durchtrittsöffnung des Auges im wesentlichen rautenförmig ausgebildet und die flächige Verbindung zwischen den Augen ist mindestens etwa doppelt so breit ist wie der Steg, welcher die Durchtrittsöffnungen umgibt. Die erfindungsgemässe Zahnschiene zeichnet sich durch eine gute Rotationsstabilität einerseits aus, andererseits weist die Schiene eine gewisse Nachgiebigkeit in Richtung der Schienenlängsachse als auch in Richtung quer zur Schienenlängsachse auf.

Bei einem Ausführungsbeispiel der erfindungsgemässen Zahnschiene weist die Schiene eine Dicke auf, welche im Bereich von 0.05 mm bis 0.5 mm liegt, vorzugsweise im Bereich von 0.1 mm bis 0.3 mm, und speziell eine Dicke von etwa 0.2 mm aufweist. Schienen mit diesen Abmessungen weisen also eine geringe Dicke auf, was den Patientenkomfort erhöht, gewährleisten aber gleichzeitig die erforderliche Stabilität der Schiene.

Bei einem weiteren Ausführungsbeispiel der erfindungsgemässen Zahnschiene liegt die maximale Breite der Zahnschiene im Bereich von 1 mm bis 5 mm, vorzugsweise im Bereich von 2 mm bis 3.5 mm, und beträgt speziell etwa 2.8 mm. Damit kann mehr oder weniger das gesamte Patientenspektrum bedient werden. Grundsätzlich reicht eine Schiene mit einer einzigen Breite aus dem genannten Bereich, z.B. der genannten Breite von 2.8 mm, aus, um das gesamte Spektrum von Patienten (Kinder und Erwachsene) abzudecken, da die Länge der Zähne (Zahnkronen) der bleibenden Zähne bei Kindern und Erwachsenen nicht sehr stark variiert. Sollen Milchzähne von Kindern geschient werden, so kann es sich unter Umständen empehlen, eine weniger breite Schiene zu verwenden, weil die Länge der Zähne (Zahnkronen) von Milchzähnen geringer ist als die Länge der Zähne (Zahnkronen) bei bleibenden Zähnen.

Vorzugsweise ist die erfindungsgemässe Zahnschiene aus einem memory-freien, plastisch verformbaren, biokompatiblen Material hergestellt, insbesondere aus Titan, welches diesbezüglich besonders guten Eigenschaften aufweist.

Die erfindungsgemässe Zahnschiene kann ein- oder mehrfarbig ausgebildet sein, wobei unter farbig eine Farbe zu verstehen ist, die von der Farbe von Titan verschieden ist. Dies kann beispielsweise für Kinder, die nach einem Trauma eine solche Zahnschiene tragen müssen, ein Anreiz sein, der das Tragen einer solchen Zahnschiene erleichtert, ist aber auch sonst als Modeerscheinung durchaus denkbar. Das Aufbringen von Farbe kann beispielsweise mittels Anodisieren erfolgen.

Wie schon bereits erwähnt, wird die Aufgabe ebenfalls gelöst durch einen Streifen eines Materials, welches für Zahnschienen eingesetzt werden kann. Ein solcher erfindungsgemässer Streifen weist eine Länge auf, die ein Mehrfaches der Länge einer Zahnschiene beträgt. Der Streifen weist - wie die Zahnschiene auch - mehrere Augen auf, wobei benachbart angeordnete Augen miteinander verbunden sind. Die einzelnen Augen weisen jeweils eine Durchtrittsöffnung auf, welche von einem Steg umgeben ist, sodass durch die Durchtrittsöffnung ein Klebstoff auf den hinter der jeweiligen Durchtrittsöffnung angeordneten Zahn aufgebracht werden kann, um die Zahnschiene am Zahn zu befestigen. Die Verbindung benachbarter Augen ist als flächige Verbindung ausgebildet, was eine gute Rotationsstabilität zur Folge hat. Da der erfindungsgemässe Streifen eine Länge aufweist, welche ein Mehrfaches der Länge einer Zahnschiene beträgt (darunter ist ein mehr als Einfaches der Länge der Zahnschiene zu verstehen), kann der erfindungsgemässe Streifen entsprechend der bei dem jeweiligen Patienten vorliegenden Situation einfach auf die erforderliche Länge zugeschnitten werden. Die übrigen Vorteile entsprechen den Vorteilen, die bereits weiter oben anhand der Zahnschiene erläutert sind.

Bei einem Ausführungsbeispiel des erfindungsgemässen Streifens ist die Durchtrittsöffnung des Auges im wesentlichen rautenförmig ausgebildet und die flächige Verbindung zwischen den Augen ist mindestens etwa doppelt so breit wie der Steg, welcher die Durchtrittsöffnungen umgibt. Die entsprechenden Vorteile dieses Ausführungsbeispiels sind bereits weiter oben bei der Diskussion des entsprechenden Ausführungsbeispiels der Zahnschiene angeführt.

Bei einem weiteren Ausführungsbeispiel des erfindungsgemässen Streifens weist dieser eine Dicke auf, welche im Bereich von 0.05 mm bis 0.5 mm liegt, vorzugsweise im Bereich von 0.1 mm bis 0.3 mm, und speziell eine Dicke von etwa 0.2 mm. Die entsprechenden Vorteile dieses Ausführungsbeispiels sind bereits weiter oben bei der Diskussion des entsprechenden Ausführungsbeispiels der Zahnschiene angeführt.

Bei einem weiteren Ausführungsbeispiel des erfindungsgemässen Streifens liegt die maximale Breite des Streifens im Bereich von 1 mm bis 5 mm, vorzugsweise im Bereich von 2 mm bis 3.5 mm, und beträgt speziell etwa 2.8 mm. Die entsprechenden Vorteile dieses Ausführungsbeispiels sind bereits weiter oben bei der Diskussion des entsprechenden Ausführungsbeispiels der Zahnschiene angeführt.

Schliesslich ist gemäss einem weiteren Ausführungsbeispiel des erfindungsgemässen Streifens dieser aus einem memory-freien, plastisch verformbaren, biokompatiblen Material hergestellt, insbesondere aus Titan. Die entsprechenden Vorteile dieses Ausführungsbeispiels sind bereits weiter oben bei der Diskussion des entsprechenden Ausführungsbeispiels der Zahnschiene angeführt.

Gemäss einem weiteren Ausführungsbeispiel des erfindungsgemässen Streifens ist dieser ein- oder mehrfarbig ausgestaltet, wobei unter farbig eine Farbe zu verstehen ist, die von der Farbe von Titan verschieden ist. Dies kann beispielsweise für Kinder, die nach einem Trauma eine solche Zahnschiene tragen müssen, ein Anreiz sein, der das Tragen einer solchen Zahnschiene erleichtert, ist aber auch sonst als Modeerscheinung durchaus denkbar. Das Aufbringen von Farbe kann beispielsweise mittels Anodisieren erfolgen.

Weitere vorteilhafte Ausgestaltungen ergeben sich aus den nachfolgenden Erläuterungen von Ausführungsbeispielen der Erfindung, welche im folgenden anhand der Zeichnung erläutert wird.

Es zeigen in schematischer Darstellung:
- Fig. 1: ein Ausführungsbeispiel eines erfindungsgemässen Streifens eines Materials, welches für Zahnschienen einsetzbar ist (z.B. Titan), vergrössert
- Fig. 2: einen Teil des Streifens gemäss dem Ausführungsbeispiel aus Fig. 1 in Seitenansicht, welche die Dicke des Streifens veranschaulicht,
- Fig. 3: einen Ausschnitt aus Fig. 1, welcher insbesondere die flächige Verbindung zwischen benachbarten Augen zeigt, weiter vergrössert
- Fig. 4: die Einzelheit IV aus Fig. 3
und
- Fig. 5: ein Ausführungsbeispiel einer erfindungsgemässen Zahnschiene in situ, wobei die Zahnschiene durch Zuschneiden des Streifens aus Fig. 1 auf die erforderliche Länge hergestellt ist.

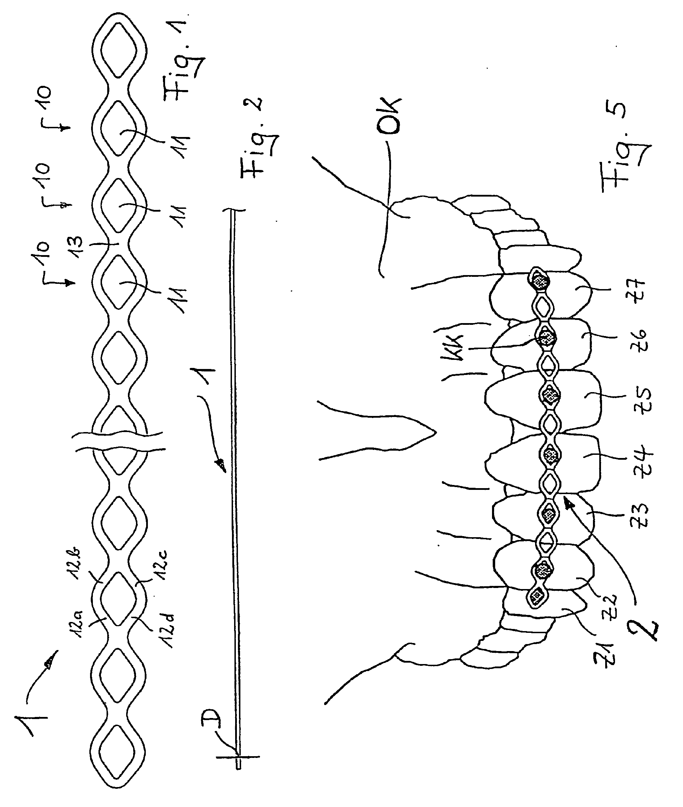

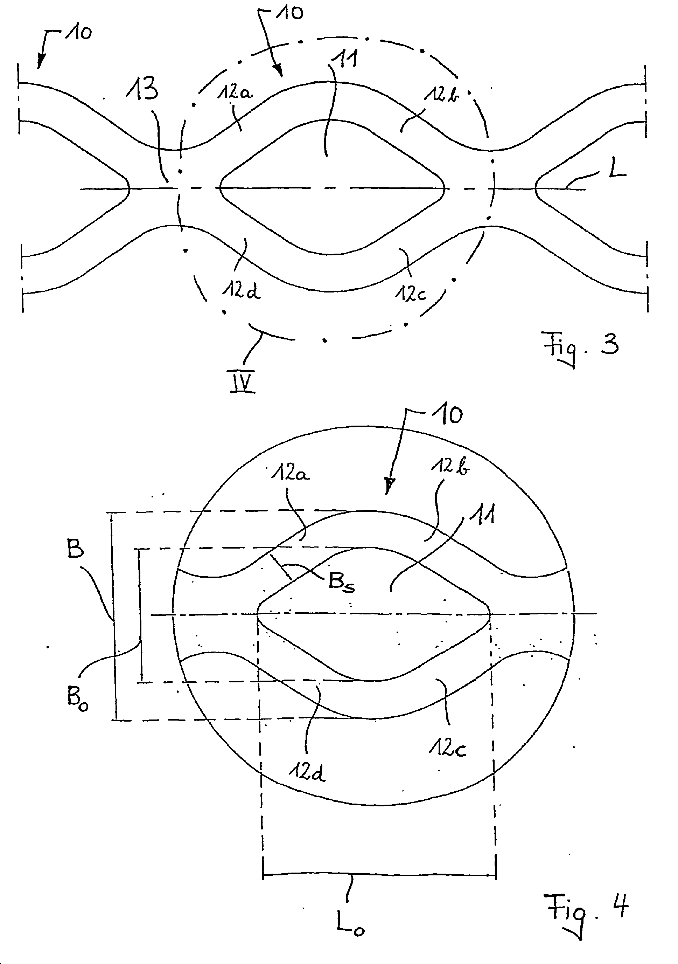

In Fig. 1 erkennt man ein Ausführungsbeispiels eines Streifens 1 eines Materials, welches für Zahnschienen 2 einsetzbar ist, beispielsweise das bereits zuvor erwähnte Titan. Der Streifen 1 weist mehrere Augen 10 auf mit jeweils einer Durchtrittsöffung 11. Die Durchtrittsöffnungen 11 sind jeweils von einem Steg umgeben, der sich aus den Stegteilen 12a,12b,12c,12d zusammensetzt. Benachbarte Augen 10 sind durch eine flächige Verbindung 13 miteinander verbunden, was die Rotationsstabilität des Streifens 1 erhöht.

Eine Zahnschiene 2 - siehe Fig. 5 - kann man aus dem in Fig.1 gezeigten Streifen 1 herstellen, indem man individuell für den jeweiligen Patienten von dem Streifen 1 ein Stück einer gewünschten Länge abtrennt, wobei die Länge der Schiene 2 eben individuell für den jeweiligen Patienten bestimmt werden kann und erst dann von dem als Vorratsstreifen gehaltenen Streifen 1 ein Stück einer entsprechenden Länge abgetrennt werden kann. Die Länge des Streifens 1 beträgt nämlich ein Mehrfaches der Länge einer Zahnschiene 2.

Die Durchtrittsöffnungen 11 der Augen 10 sind bei dem Ausführungsbeispiel gemäss Fig. 1 im wesentlichen rautenförmig ausgebildet, weisen also die Form einer Raute auf, wobei die einzelnen Ecken der Raute - wie hier dargestellt, vorzugsweise verrundet ausgebildet sind, sodass die benachbarten Stegteile 12a,12b,12c,12d verrundet ineinander übergehen. Diese Gestalt der Durchtrittsöffnungen 11 erkennt man in Fig. 3 und Fig. 4 noch besser als in Fig. 1. Die Verbindung 13 benachbart angeordneter Augen 10 ist flächig ausgebildet und ist mindestens etwa doppelt so breit wie der Steg bzw. die einzelnen Stegteile 12a,12b,12c,12d. Eine aus einem solchen Streifen 1 gewonnene Zahnschiene 2 ist einerseits rotationsstabil, weist aber andererseits eine gewisse (wenngleich geringe) Nachgiebigkeit sowohl in Richtung der Schienenlängsachse L als auch in Richtung quer (das schliesst insbesondere auch senkrecht ein) zur Schienenlängsachse L auf.

Wie man in Fig. 2 erkennt, weist der Streifen 1 und dementsprechend auch die Schiene 2 eine geringe Dicke D auf, welche bei dem gezeigten Ausführungsbeispiel etwa 0.2 mm beträgt, allgemein jedoch im Bereich von 0.05 mm bis 0.5 mm liegt, vorzugsweise im Bereich von 0.1 mm bis etwa 0.3 mm. Die Dicke D kann dabei von dem jeweils verwendeten Material abhängen, bei dem gezeigten Ausführungsbeispiel handelt es sich - wie bereits weiter oben eläutert - um das biokompatible Material Titan.

In Fig. 4, in welcher die Einzelheit IV aus Fig. 3 dargestellt ist, sind die Abmessungen an einem Auge 10 eines praktischen Ausführungsbeispiels eines Streifens 1 bzw. einer Zahnschiene 2 aufgetragen. Die Breite B des Streifens 1 bzw. der Zahnschiene 2 beträgt hier etwa 2.8 mm, die Breite Bₒ der Durchtrittsöffnung 11 hingegen etwa 1.8 mm beträgt. Die Breite Bₛ der Stegteile 12a,12b,12c,12d kann etwa 0.5 mm betragen. Schliesslich kann die Länge Lₒ der Durchtrittsöffnung 11 etwa 2.8 mm betragen.

Allgemein liegt die maximale Breite B des Streifens 1 bzw. der Zahnschiene 2 im Bereich von 1 mm bis 5 mm, vorzugsweise im Bereich von 2 mm bis 3.5 mm, wobei es vorteilhaft ist, Streifen 1 mit unterschiedlicher Breite vorrätig zu haben, um die Breite B der Zahnschiene 2 jeweils individuell für den jeweiligen Patienten und die jeweilige anatomische Situation auswählen zu können.

Die geringen Abmessungen des Streifens 1 bzw. der Zahnschiene 2, insbesondere auch die geringe Dicke D, haben einen guten Patientenkomfort zur Folge. Die Zahnschiene 2 stört praktisch nicht, allenfalls nur wenig, es sind nur vergleichsweise kleine Klebeflächen (und entsprechend weniger Klebstoff) erforderlich, eine gute Hygiene sowohl interdental als auch im Bereich des Sulcus ist gewährleistet. Gleichzeitig erfüllt die Zahnschiene aber die Anforderungen einer modernen Schienungstechnik nach Zahntraumata im Hinblick auf die Erhaltung der physiologischen Beweglichkeit sowohl der traumatisierten Zähne als auch der Stützzähne. Sie gewährleistet eine rasche und funktionelle Rehabilitation und das bei einer individuellen Anpassbarkeit der Zahnschiene 2.

Wie bereits erwähnt, ist das gezeigte Ausführungsbeispiel des erfindungsgemässen Streifens 1 bzw. der erfindungsgemässen Zahnschiene 2 aus Titan hergestellt. Allgemein kann der Streifen 1 bzw. die Zahnschiene 2 jedoch aus einem memory-freien, plastisch verformbaren, biokompatiblen Material hergestellt sein.

Die - vorzugsweise aus Titan - hergestellten Streifen 1 bzw. die Zahnschiene 2 können ein- oder mehrfarbig ausgebildet sein, wobei farbig in diesem Zusammenhang für eine von der Farbe von Titan verschiedene Farbe steht. Dies kann z.B. für Kinder, die nach einem Trauma eine solche Zahnschiene tragen müssen, einen Anreiz bedeuten, eine solche Zahnschiene leichter zu ertragen bzw. kann auch sonst als Modeerscheinung denkbar sein, wenn man schon eine solche Zahnschiene tragen muss.

Das gezeigte Ausführungsbeispiel des erfindungsgemässen Streifens 1 aus Titan kann derart hergestellt sein, dass sowohl die äussere Kontur des Streifens 1 als auch die Durchtrittsöffnungen 11 durch Laserschneiden hergestellt werden. Alternativ kommen auch andere Verfahren wie z.B. Stanzen, Streckverfahren, die Ätztechnik oder das Wasserstrahl-Schneiden in Betracht.

In Fig. 5 ist schliesslich eine Zahnschiene 2 in situ dargestellt, welche aus einem Streifen 1 der gewünschten Breite B auf die optimale Länge zugeschnitten wurde. Man erkennt einen Oberkiefer OK, bei welchem sich die Zahnschiene 2 über die Zähne Z1,Z2,Z3,Z4,Z5,Z6,Z7 erstreckt. Beispielsweise können die Zähne Z4 und Z5 die Zähne mit der erhöhten Beweglichkeit sein, sodass die übrigen Zähne Z1,Z2,Z3,Z6,Z7 als Stützzähne fungieren.

Das Aufbringen der Zahnschiene 2 erfolgt mittels der bereits weiter vorne erläuterten Säure-Ätz-Technik, die Schiene wird also auf die gereinigten und (chemisch) aufgerauhten Zähne mittels eines Kunststoff-Klebers KK aufgeklebt. Die geringen Abmessungen der- Zahnschiene 2 im Verhältnis zu den Zähnen Z1-Z7 ist in Fig. 5 gut zu erkennen und unterstreicht noch einmal den hohen Patientenkomfort. Für den behandelnden Arzt ist die Zahnschiene 2 beim Anbringen einfach und bequem zu handhaben,sodass auch von der Seite des Handlings her die Zahnschiene 2 komfortabel ist.

## Patentansprüche

1. Zahnschiene (2) zur Fixierung eines Zahnes (Z4,Z5) mit erhöhter Beweglichkeit, welche Zahnschiene (2) mehrere Augen (10) aufweist, wobei benachbart angeordnete Augen (10) durch eine flächige Verbindung (13) miteinander verbunden sind, und wobei die einzelnen Augen (10) jeweils eine Durchtrittsöffnung (11) aufweisen, welche von einem Steg (12a,12b,12c,12d) umgeben ist, sodass durch die Durchtrittsöffnung (11) z.B. ein Klebstoff (KK) auf den hinter der jeweiligen Durchtrittsöffnung (11) angeordneten Zahn (Z1, Z2, Z3, Z4, Z5,-Z6, Z7) aufgebracht werden kann, um die Zahnschiene (2) am Zahn zu befestigen, **dadurch gekennzeichnet, dass** die Durchtrittsöffnung (11) des Auges (10) im wesentlichen rautenförmig ausgebildet ist und dass die flächige Verbindung (13) zwischen den Augen (10) mindestens etwa doppelt so breit ist wie der Steg (12a, 12b, 12c,12d), welcher die Durchtrittsöffnungen (11) umgibt.

2. Zahnschiene (2) nach Anspruch 1, **dadurch gekennzeichnet, dass** die Schiene eine Dicke (D) aufweist, welche im Bereich von 0.05 mm bis 0.5 mm liegt, vorzugsweise im Bereich von 0.1 mm bis 0.3 mm, und speziell eine Dicke (D) von etwa 0.2 mm aufweist.

3. Zahnschiene (2) nach einem der vorangehenden Ansprüche, **dadurch gekennzeichnet, dass** die maximale Breite (B) der Zahnschiene (2) im Bereich von 1 mm bis 5 mm liegt, vorzugsweise im Bereich von 2 mm bis 3.5 mm, und speziell etwa 2.8 mm beträgt.

4. Zahnschiene (2) nach einem der vorangehenden Ansprüche, **dadurch gekennzeichnet, dass** sie aus einem memory-freien, plastisch verformbaren, biokompatiblen Material hergestellt ist, insbesondere aus Titan.

5. Zahnschiene (2) nach einem der vorangehenden Ansprüche, **dadurch gekennzeichnet, dass** sie ein- oder mehrfarbig ausgestaltet ist.

6. Streifen (1) eines Materials, welches für Zahnschienen (2) eingesetzt werden kann, welcher Streifen (1) eine Länge aufweist, die ein Mehrfaches der Länge einer Zahnschiene (2) beträgt, und welcher Streifen (1) mehrere Augen (10) aufweist, wobei benachbart angeordnete Augen (10) durch eine flächige Verbindung (13) miteinander verbunden sind, und wobei die einzelnen Augen (10) jeweils eine Durchtrittsöffnung (11) aufweisen, welche von einem Steg (12a,12b,12c,12d) umgeben ist, sodass durch die Durchtrittsöffnung. (11) ein Klebstoff (KK) auf den hinter der jeweiligen Durchtrittsöffnung (11) angeordneten Zahn (Z1,Z2,Z3,Z4,Z5,Z6,Z7) aufgebracht werden kann, um die Zahnschiene (2) am Zahn zu befestigen, **dadurch gekennzeichnet, dass** die Durchtrittsöffnung (11) des Auges (10) im wesentlichen rautenförmig ausgebildet ist und dass die flächige Verbindung (13) zwischen den Augen (10) mindestens etwa doppelt so breit ist wie der Steg (12a,12b,12c,12d), welcher die Durchtrittsöffnungen (11) umgibt.

7. Streifen (1) nach Anspruch 6, **dadurch gekennzeichnet, dass** der Streifen (1) eine Dicke (D) aufweist, welche im Bereich von 0.05 mm bis 0.5 mm liegt, vorzugsweise im Bereich von 0.1 mm bis 0.3 mm, und speziell eine Dicke (D) von etwa 0.2 mm aufweist.

8. Streifen (1) nach einem der Ansprüche 6 oder 7, **dadurch gekennzeichnet, dass** die maximale Breite (B) des Streifens (1) im Bereich von 1 mm bis 5 mm liegt, vorzugsweise im Bereich von 2 mm bis 3.5 mm, und speziell etwa 2.8 mm beträgt.

9. Streifen (1) nach einem der Ansprüche 6 bis 8, **dadurch gekennzeichnet, dass** er aus einem memory-freien, plastisch verformbaren, biokompatiblen Material hergestellt ist, insbesondere aus Titan.

10. Streifen (1) nach einem der Ansprüche 6 bis 9, **dadurch gekennzeichnet, dass** er ein- oder mehrfarbig ausgestaltet ist.

## Claims

1. Dental splint (2) for fixing a tooth (Z4,Z5) with increased mobility, which dental splint (2) has several eyes (10), adjacent eyes (10) being interconnected by a flat connection (13), and the individual eyes (10) each having a through-opening (11) which is surrounded by a link (12a,12b,12c,12d) so that it is possible, by way of the through-opening (11), to apply for example an adhesive (KK) to the tooth (Z1,Z2,Z3,Z4,Z5,Z6,Z7) located behind the respective through-opening (11) in order to secure the dental splint (2) on the tooth, **characterized in that** the through-opening (11) of the eye (10) is substantially diamond-shaped and **in that** the flat connection (13) between the eyes (10) is at least twice as wide as the link (12a,12b,12c,12d) which surrounds the through-openings (11).

2. Dental splint (2) according to claim 1, **characterized in that** the splint has a thickness (D) which is in the range of 0.05 mm to 0.5 mm, preferably in the range of 0.1 mm to 0.3 mm, and in particular has a thickness (D) of approximately 0.2 mm.

3. Dental splint (2) according to any one of the preceding claims, **characterized in that** the maximum width (B) of the dental splint (2) is in the range of 1 mm to 5 mm, preferably in the range of 2 mm to 3.5 mm, and is in particular approximately 2.8 mm.

4. Dental splint (2) according to any one of the preceding claims, **characterized in that** it is made of a memory-free, plastically deformable, biocompatible material, in particular of titanium.

5. Dental splint (2) according to any one of the preceding claims, **characterized in that** it is single-colored or multi-colored.

6. Strip (1) of a material which can be used for dental splints (2), which strip (1) has a length which is a multiple of the length of a dental splint (2), and which strip (1) has several eyes (10), adjacent eyes (10) being interconnected by a flat connection (13), and the individual eyes each having a through-opening (11) which is surrounded by a link (12a,12b,12c,12d) so that it is possible, by way of the through-opening (11), to apply an adhesive (KK) to the tooth (Z1,Z2,Z3,Z4,Z5,Z6,Z7) located behind the respective through-opening (11) in order to secure the dental splint (2) on the tooth, **characterized in that** the through-opening (11) of the eye (10) is essentially diamond-shaped, and **in that** the flat connection (13) between the eyes (10) is at least approximately twice as wide as the link (12a,12b,12c,12d) which surrounds the through-openings (11).

7. Strip according to claim 6, **characterized in that** the strip (1) has a thickness (D) which is in the range of 0.05 mm to 0.5 mm, preferably in the range of 0.1 mm to 0.3 mm, and in particular has a thickness (D) of approximately 0.2 mm.

8. Strip according to any one of claims 6 or 7, **characterized in that** the maximum width (B) of the strip (1) is in the range of 1 mm to 5 mm, preferably in the range of 2 mm to 3.5 mm, and is in particular approximately 2.8 mm.

9. Strip (1) according to any one of claims 6 to 8, **characterized in that** it is made of a memory-free, plastically deformable, biocompatible material, in particular of titanium.

10. Strip (1) according to any one of claims 6 to 9, **characterized in that** it is single-colored or multi-colored.

## Revendications

1. Tringle crénelée (2) pour la fixation d'une dent (Z4, Z5) avec une mobilité accrue, ladite tringle crénelée (2) présentant plusieurs oeillets (10), les oeillets disposés les uns près des autres (10) étant reliés ensemble par une connexion surfacique (13) et les différents oeillets (10) présentant respectivement un orifice de passage (11) qui est entouré d'une bordure (12a, 12b, 12c, 12d), de sorte qu'on peut appliquer à travers l'orifice de passage (11) par exemple une colle (KK) sur la dent (Z1, Z2, Z3, Z4, Z5, Z6, Z7) disposée derrière l'orifice de passage respectif (11) afin de fixer la tringle crénelée (2) à la dent, **caractérisée en ce que** l'orifice de passage (11) de l'oeillet (10) est sensiblement réalisé en forme de losange et que la connexion surfacique (13) entre les oeillets (10) est environ deux fois plus large que la bordure (12a, 12b, 12c, 12d) entourant les orifices de passage (11).

2. Tringle crénelée (2) selon la revendication 1, **caractérisée en ce que** la tringle présente une épaisseur (D) qui se situe dans la plage de 0.05 mm à 0.5 mm, de préférence dans la plage de 0.1 mm à 0.3 mm, et spécialement une épaisseur (D) d'environ 0.2 mm.

3. Tringle crénelée (2) selon l'une quelconque des revendications précédentes, **caractérisée en ce que** la largeur maximale (B) de la tringle crénelée (2) se situe dans la plage de 1 mm à 5 mm, de préférence dans la plage de 2 mm à 3.5 mm, et spécialement est d'environ 2.8 mm.

4. Tringle crénelée (2) selon l'une quelconque des revendications précédentes, **caractérisée en ce qu'**elle est fabriquée à partir d'un matériau biocompatible sans mémoire et déformable plastiquement, notamment à partir de titane.

5. Tringle crénelée (2) selon l'une quelconque des revendications précédentes, **caractérisée en ce qu'**elle est réalisée en une ou plusieurs couleurs.

6. Bande (1) de matériau pouvant être utilisée pour des tringles crénelées (2), ladite bande (1) ayant une longueur représentant un multiple de la longueur d'une tringle crénelée (2) et ladite bande (1) présentant plusieurs oeillets (10), les oeillets disposés les uns près des autres (10) étant reliés ensemble par une connexion surfacique (13) et les différents oeillets (10) présentant respectivement un orifice de passage (11) qui est entouré d'une bordure (12a, 12b, 12c, 12d), de sorte qu'on peut appliquer à travers l'orifice de passage (11) une colle (KK) sur la dent (Z1, Z2, Z3, Z4, Z5, Z6, Z7) disposée derrière l'orifice de passage respectif (11) afin de fixer la tringle crénelée (2) à la dent, **caractérisée en ce que** l'orifice de passage (11) de l'oeillet (10) est sensiblement réalisé en forme de losange et que la connexion surfacique (13) entre les oeillets (10) est environ deux fois plus large que la bordure (12a, 12b, 12c, 12d) entourant les orifices de passage (11).

7. Bande (1) selon la revendication 6, **caractérisée en ce que** la bande (1) présente une épaisseur (D) qui se situe dans la plage de 0.05 mm à 0.5 mm, de préférence dans la plage de 0.1 mm à 0.3 mm, et spécialement une épaisseur (D) d'environ 0.2 mm.

8. Bande (1) selon l'une quelconque des revendications 6 ou 7, **caractérisée en ce que** la largeur maximale (B) de la bande (1) se situe dans la plage de 1 mm à 5 mm, de préférence dans la plage de 2 mm à 3.5 mm, et spécialement est d'environ 2.8 mm.

9. Bande (1) selon l'une quelconque des revendications 6 à 8, **caractérisée en ce qu'**elle est fabriquée à partir d'un matériau biocompatible sans mémoire et déformable plastiquement, notamment à partir de titane.

10. Bande (1) selon l'une quelconque des revendications 6 à 9, **caractérisée en ce qu'**elle est réalisée en une ou plusieurs couleurs.
